# EUROPÄISCHE PATENTANMELDUNG

(11) **EP 0 752 261 A1**
(43) Veröffentlichungstag der Anmeldung: **08.01.1997**
(21) Anmeldenummer: 96108709.5
(22) Anmeldetag: 31.05.1996
(51) Int. Cl.: B01D 3/00

(54) **Ablaufzunge für Flüssigkeitsverteiler**

(30) Priorität: 07.07.1995 DE 19524774
(71) Anmelder: JULIUS MONTZ GmbH, D-40723 Hilden (DE)
(72) Erfinder: Streuber, Hans-Peter, 42699 Solingen (DE)
(74) Vertreter: COHAUSZ HASE DAWIDOWICZ & PARTNER

(57) **Zusammenfassung**

Die Erfindung betrifft eine Ablaufzunge mit darüber angeordneter Flüssigkeitsaustrittsöffnung, die im unteren Teil eine sich verjüngende Form aufweist, vorzugsweise an den Endverteilerwänden von Rinnenverteilern, wobei auf der Ablaufzunge ein insbesondere gewölbtes flächiges Leitelement angebracht ist, welches zumindest im mittleren Bereich an der Endverteilerwand anliegt und parallel zur Ablaufzunge verläuft.

## Beschreibung

Die Erfindung betrifft eine Ablaufzunge mit darüber angeordneter Flüssigkeitsaustrittsöffnung, die im unteren Teil eine sich verjüngende Form aufweist, vorzugsweise an den Endverteilerwänden von Rinnenverteilern.

Ablaufzungen für Flüssigkeitsverteiler sind zum Beispiel aus der DE 31 41 930, DE 33 06 636, DE 34 09 524 und der DE 42 26 177 bekannt. Jeder Ablaufzunge ist dabei eine obere Flüssigkeitsaustrittsöffnung zugeordnet. Diese Flüssigkeitsaustrittsöffnung kann je nach Flüssigkeitsbelastung von unterschiedlicher Größe und Form sein. Die Ablaufzunge dient dazu, die Flüssigkeit gleichmäßig auf die Austauschabschnitte von Wärme- und Stoffaustauschkolonnen zu verteilen. Dabei ist es wichtig, daß die Flüssigkeit bis zum Abtropfen bzw. Abfließen an der Abflußzunge verbleibt und nicht abgelenkt wird.

Sehr kleine Flüssigkeitsmengen werden gemäß den angeführten Schriften mit Hilfe von Kapillardrähten aus den Austrittsöffnungen auf die Ablaufzungen geleitet. Pro Kapillardraht ergibt sich eine Abtropf- bzw. eine Ablaufstelle. Größere Flüssigkeitsmengen fließen aus den Austrittsöffnungen direkt auf die Ablaufzungen. Zur Verbesserung der Flüssigkeitsführung wurde gemäß DE 34 09 524 vorgeschlagen, im oberen Bereich der Ablaufzungen Leitlappen anzubringen. Die Ausbildung der Ablaufzunge und der Flüssigkeitsaustrittsöffnung muß hierbei der Flüssigkeitsbelastung des Verteilerbodens angepaßt werden.

Aufgabe der Erfindung ist es, eine konstruktiv einfache und leicht herzustellende und zu montierende Ablaufzunge mit zugeordneter Flüssigkeitsaustrittsöffnung zu schaffen, die über einen großen Belastungsbereich ein gezieltes Abtropfen bzw. Ablaufen der Flüssigkeit gewährleistet. Ferner sollte die Anzahl der Abtropf- bzw. Ablaufstellen pro Flüssigkeitsaustrittsöffnung verdoppelt werden.

Diese Aufgabe wird erfindungsgemäß dadurch gelöst, daß auf der Ablaufzunge ein insbesondere gewölbtes flächiges Leitelement angebracht ist, welches zumindest im mittleren Bereich an der Endverteilerwand anliegt und parallel zur Ablaufzunge verläuft.

Das flächige Leitelement erreicht eine optimale Vergleichmäßigung und Verteilung der ankommenden Flüssigkeit sowohl bei großen und mittleren als auch bei sehr kleinen Flüssigkeitsmengen, so daß es immer zu einem gleichmäßig verteilten Abfließen und/oder Abtropfen kommt.

Die Anzahl der Abtropfstellen wird verdoppelt, wenn die Ablaufzunge an ihrem unteren Ende zwei Abtropfnasen bildet. Diese größere Zahl von Abtropfstellen wird sehr gleichmäßig mit Flüssigkeit versorgt, da die Leitelemente eine optimale Vergleichmäßigung und Verteilung der Flüssigkeit erreichen. Hierbei ist von Vorteil, wenn das Leitelement durchgehend von der Flüssigkeitsaustrittsöffnung bis zu den Abtropfnasen verläuft.

Vorzugsweise wird vorgeschlagen, daß das Leitelement im oberen Bereich auf etwa 1/4 bis 1/2, insbesondere 1/3 seiner Breite reduziert und durch die Flüssigkeitsaustrittsöffnung in die dahinterliegende Flüssigkeitszone an der Endverteilerwand anliegend geführt ist. Hierdurch wird gewährleistet, daß die Flüssigkeit früh und gleichmäßig durch die Flüssigkeitsaustrittsöffnung hindurchtritt. Dies kann noch dadurch verbessert werden, daß der obere Bereich des Leitelements bis zum Grund der Flüssigkeitszone und an der Endverteilerwand anliegend geführt ist.

Eine optimale Flüssigkeitsführung bei sehr guter Verteilung wird erreicht, wenn das Leitelement aus feinmaschigem Draht- oder Kunststoff-Gewebe, engmaschigem Steckmetall oder perforiertem Blech oder perforierter Kunststoffolie besteht.

Das Leitblech kann punktförmig angeschweißt oder angelötet sein. Eine sehr einfache Herstellung und Montage wird erreicht, wenn das Leitelement mit Hilfe von Klammern in Schlitzen lösbar mit der Ablaufzunge verbunden ist.

Vorzugsweise wird vorgeschlagen, daß die Flüssigkeitsaustrittsöffnung im unteren Teil eine sich verjüngende Form aufweist. Auch ist von Vorteil, wenn die Erzeugende der teilzylindrischen Wölbung in Fließrichtung der Flüssigkeit liegt, da hierdurch Längsspalte zwischen Zunge und Leitelement gebildet werden, die die Flüssigkeit sicher aufnehmen und führen.

Die Ablaufzunge mit Leitelement kann senkrecht stehen oder auch ca. 25-45 Grad von der Senkrechten abweichen. In der Zeichnung ist die Erfindung dargestellt. Es zeigen:

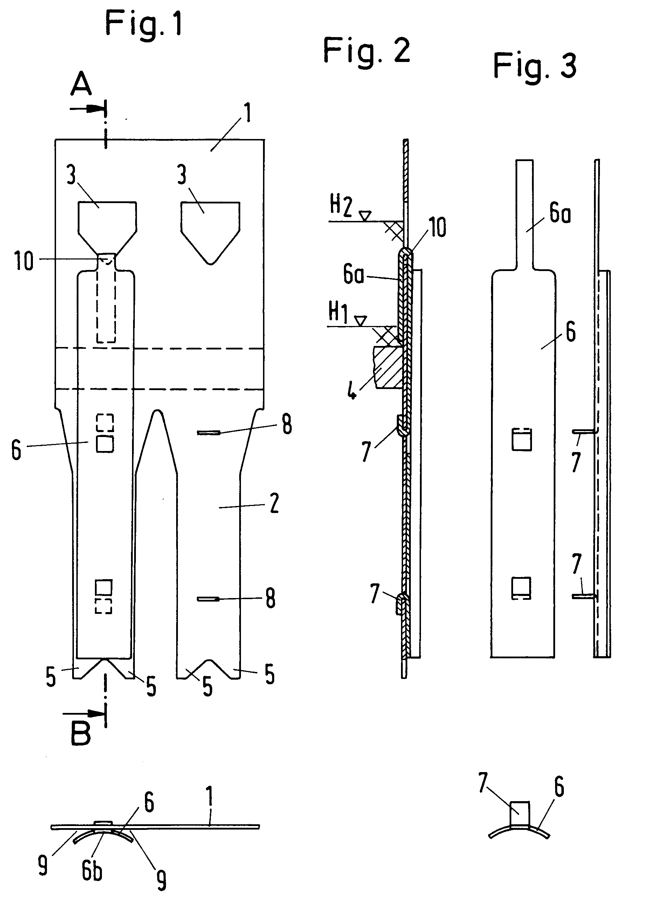

- Figur 1:: Einen Abschnitt aus einer Endverteilerwand eines Verteilerbodens mit zwei Ablaufzungen, von denen eine mit einem Leitelement versehen ist.
- Figur 2:: Den Schnitt A + B der Figur 1 und
- Figur 3:: das Leitelement als Einzelteil.

Die Endverteilerwände 1 eines Rinnenverteilers sind mit Ablaufzungen 2 versehen, denen Flüssigkeitsaustrittsöffnungen 3 zugeordnet sind, die im unteren Bereich eine dreieckige Form aufweisen. Die Ablaufzungen 2 liegen unter dem Flüssigkeitsabschluß 4 des Verteilers und haben je zwei Abtropfnasen 5. Auf den Ablaufzungen 2 befinden sich gewölbte Leitelemente 6, die nur im mittleren Bereich an den Endverteilerwänden 1 anliegen und nach oben bis zu den Flüssikgeitsaustrittsöffnungen 3 verlaufen. Sie sind im oberen Bereich 6a auf etwa 1/2 bis 1/4, vorzugsweise 1/3 ihrere Breite reduziert und werden durch die Flüssigkeitsaustrittsöffnung 3 im unteren dreieckigen Bereich in die dahinterliegende Flüssigkeitszone bis zum Grund derselben an den Endverteilerwänden 1 anliegend geführt. Die Leitelemente 6 können durch Punktschweißung fest oder auch durch Klammern 7 lösbar im Schlitz 8 mit den Ablaufzungen verbunden werden. Die so zwischen den Endverteilerwänden 1 und den aufgesetzen Leitelementen 6 gebildeten Zwickel 9 sind bevorzugte Flüssigkeitskanäle, die für eine gleichmäßige Beaufschlagung der Abtropfnasen 5 sorgen.

Die Leitelemente 6 werden zweckmäßigerweise aus einem feinmaschigen Drahtgewebe mit Kapillarwirkung hergestellt. Sie können aber auch aus engmaschigem Steckmetall oder perforiertem Blech oder aus perforiertem Kunststoff gefertigt werden.

Die Ablaufzungen 2 mit aufgesetzten Leitelementen 6 arbeiten in einem sehr großen Belastungsbereich. Bei einem Flüssikgeitsstand H1 erfolgt der Flüssigkeitstransport durch Kapillarwirkung innerhalb des Bereiches 6a des Leitelements 6. Bevor die Kapillarwirkung einsetzt, steigt der Flüssigkeitsspiegel zunächst bis in den unteren Bereich der Flüssigkeitsaustrittsöffnungen 3. Die von dem Element 6a eingechlossene Zone 10 erleichtert das Anspringen der einzelnen Ablaufzungen 2. Die relativ große Höhendifferenz zwischen Flüssigkeitsspiegel H1 in den Rinnen und den Abtropfnasen 5 wirkt sich günstig auf den Flüssigkeitstransport aus. Mit steigender Flüssigkeitsbelastung H2 erfolgt ein direkter Überlauf aus den Flüsigkeitsaustrittsöffnungen 3. Hierbei füllen sich sofort die Zwickel 9 und leiten auch größere Flüssigkeitsmengen sicher zu den Abtropfnasen.

Die Leitelemente 6 lassen sich maschinell in einem Arbeitsgang herstellen und sind einfach zu befestigen. Die Verdoppelung der Tropfstellen reduziert die Zahl der Ablaufzungen auf die Hälfte und macht es so möglich, diese breiter und damit stabiler auszuführen.

## Patentansprüche

1. Ablaufzunge (2) mit darüber angeordneter Flüssigkeitsaustrittsöffnung (3), die im unteren Teil eine sich verjüngende Form aufweist, vorzugsweise an den Endverteilerwänden (1) von Rinnenverteilern, **dadurch gekennzeichnet,** daß auf der Ablaufzunge (2) ein insbesondere gewölbtes flächiges Leitelement (6) angebracht ist, welches zumindest im mittleren Bereich (6b) an der Endverteilerwand (1) anliegt und parallel zur Ablaufzunge verläuft.

2. Ablaufzunge nach Anspruch 1, **dadurch gekennzeichnet,** daß die Ablaufzunge (2) an ihrem unteren Ende zwei Abtropfnasen (5) bildet.

3. Ablaufzunge nach Anspruch 1 oder 2, **dadurch gekennzeichnet,** daß das Leitelement (6) durchgehend von der Flüssigkeitsaustrittsöffnung (3) bis zu den Abtropfnasen (5) verläuft.

4. Ablaufzunge nach einem der vorherigen Ansprüche, **dadurch gekennzeichnet,** daß das Leitelement (6) im oberen Bereich (6a) auf etwa 1/4 bis 1/2, insbesondere 1/3 seiner Breite reduziert und durch die Flüssigkeitsaustrittsöffnung (3) in die dahinterliegende Flüssigkeitszone an der Endverteilerwand (1) anliegend geführt ist.

5. Ablaufzunge nach Anspruch 4, **dadurch gekennzeichnet,** daß der obere Bereich des Leitelements bis zum Grund der Flüssigkeitszone und an der Endverteilerwand (1) anliegend geführt ist.

6. Ablaufzunge nach einem der vorherigen Ansprüche, **dadurch gekennzeichnet,** daß das Leitelement (6) aus feinmaschigem Draht- oder Kunststoff-Gewebe, engmaschigem Steckmetall oder perforiertem Blech oder perforierter Kunststoffolie besteht.

7. Ablaufzunge nach einem der vorherigen Ansprüche, **dadurch gekennzeichnet,** daß das Leitelement (6) mit Hilfe von Klammern (7) in Schlitzen (8) lösbar mnit der Ablaufzunge (2) verbunden ist.

8. Ablaufzunge nach einem der vorherigen Ansprüche, **dadurch gekennzeichnet,** daß die Flüssigkeitsaustrittsöffnung (3) im unteren Teil eine sich verjüngende Form aufweist.

9. Ablaufzunge nach einem der vorherigen Ansprüche, **dadurch gekennzeichnet,** daß die Erzeugende der teilzylindrischen Wölbung in Fließrichtung der Flüssigkeit liegt.
